# EUROPEAN PATENT APPLICATION

(11) **EP 2 420 201 A1**
(43) Date of publication of application: **22.02.2012**
(21) Application number: 10008645.3
(22) Date of filing: 19.08.2010
(51) Int. Cl.: A61C 17/34, H02P 7/29, H02P 25/00

(54) **Method for detecting the mechanical load on a vibratory mechanism**

(71) Applicant: Braun GmbH, 61476 Kronberg/Taunus (DE)
(72) Inventor: Klemm, Torsten, 65760 Eschborn (DE); Vetter, Ingo, 61184 Karben (DE); Jungnickel, Uwe, 61462 Königstein/Taunus (DE)

(57) **Abstract**

A method for detecting a mechanical load on a vibratory mechanism of a small electric appliance driven by an electric motor, wherein the electric motor is powered by a drive current having a predetermined frequency, wherein, at a predetermined time of measurement the electrical quantity generated by the electric motor is evaluated and wherein the evaluated electrical quantity is indicative of the mechanical load on the vibratory mechanism, as well as a small electrical appliance with a vibratory mechanism and an electric motor to drive the vibratory mechanism.

## Description

### FIELD OF THE INVENTION

The invention relates to a method for detecting a mechanical load on a vibratory mechanism of a small electrical appliance, for example, an electric toothbrush or an electric razor, and the invention relates to a small electrical appliance with a device for detecting a mechanical load on a vibratory mechanism of the small appliance.

### BACKGROUND OF THE INVENTION

In small electrical appliances, a vibrating direct drive is typically provided to drive vibratory mechanical components, for example, an oscillating electric motor. Such drives are used in electric shavers and electric toothbrushes, for example, in which the working amplitude is created without a gearing mechanism. Vibratory mechanical components are principally the armature of the oscillating electric motor, a drive shaft, and possibly a component coupled with the drive shaft, such as a brush head for an electric toothbrush.

To achieve high efficiency, it is desirable for the resonant frequency of the vibrating mechanical components to roughly coincide with the frequency of the drive current of the electric motor of the small appliance.

Providing a drive system in small electrical appliances is known, in which the electric motor is powered by a drive current with a fixed frequency that is near the resonance frequency of the vibratory mechanical components. However, the resonant frequency of the vibrating mechanical parts is dependent on several factors that can change while the small appliance is in operation. Thus, during operation, the mechanical load on the vibratory mechanical parts fluctuates, e.g. when the user changes the pressure on the bristles of a toothbrush while brushing teeth. This results in an instantaneous change in the resonant frequency of the vibrating mechanical parts. Since in this case the efficiency and/or the performance of the small electrical appliance suffers, it would therefore be advantageous if the small device would always be used in a way that the resonant frequency of the mechanical system would be close to the frequency of the drive current.

Thus, there is a desire to provide a method and a small electrical appliance in which a mechanical load on a vibratory mechanism of the small electrical appliance can be detected during operation and which is inexpensive and easy to implement.

### SUMMARY OF THE INVENTION

This desire is satisfied by a method and a small electrical appliance according to the independent claims. Further embodiments of the invention are indicated in the dependent claims.

A method is provided for detecting a mechanical load on a vibratory mechanism driven by an electric motor of a small electrical appliance, wherein the electric motor is driven by a drive current having a predetermined frequency, wherein the electrical quantity generated by the electric motor is determined at a predetermined time of measurement, and wherein the analyzed electrical quantity indicates the mechanical load on the vibratory mechanism.

The mechanical load can be detected in a simple way by evaluating the electric quantity generated by the electric motor, which is indicative of the mechanical load. In this way, the complexity of the circuit and the number of electrical components in a small electric device can be minimized, which has a positive effect on the energy consumption of the small electrical appliance and, above all, contributes to lower production costs.

The electrical quantity generated by the electric motor can be the generator voltage at a windingof the electric motor. If the vibratory mechanism undergoes external mechanical load during operation, the resonance frequency of the vibratory mechanism changes, which leads to a change in the generator voltage at the time of measurement. If the generator voltage reaches a predetermined value at the time of measurement, this can be an indication of a mechanical load or a change in the mechanical load on the small electrical appliance.

Thus, based on the indication, the user can change his handling of the small device to keep it in the resonance range. He will thus be guided to use the device so that it always performs optimally.

The time of measurement can be selected such that it is near a zero crossing of the generator voltage of a vibratory mechanism that is mechanically unloaded.

It is particularly advantageous to select the time of measurement so that a zero crossing of the generator voltage is reached at the time of measurement, adjusting for a mechanical load on the vibratory mechanism. In this connection, it is advantageous for the zero crossing of the generator voltage to be very easily detected.

The frequency of the generator voltage can correspond to the resonant frequency of the vibratory mechanism.

The generator voltage can be tapped at the winding of the electric motor and a comparator applied to compare the generator voltage with a predetermined reference voltage.

The reference voltage may be 0 Volt (V).

The comparator may be arranged to provide a binary output signal depending on the comparison, wherein the output signal provided may be fed into a processing device.

In an embodiment of the invention, depending on the determined electrical quantity, which is indicative of the mechanical load on the vibratory mechanism, an audible and/or visual signal can be generated. The audible and/or visual signal can alert the user of the small electrical appliance to mechanical load. If the signal indicates a change in load, and thus a deviation from optimal performance, because of his awareness of the signal, the user can bring the device back into resonance by changing the handling of the device, which causes the signal to disappear. Thus, the user can intuitively optimize his handling of the small device.

Also provided is a small electrical appliance with a vibratory mechanism, an electric motor to drive the vibratory mechanism, wherein the electric motor can be operated with a drive current having a predetermined frequency, and a device for detecting a mechanical load on the vibratory mechanism, wherein the device is designed to evaluate an electrical quantity generated by the electric motor at a predetermined time of measurement, wherein the measured electrical quantity is indicative of the mechanical load on the vibratory mechanism.

The electrical quantity to be evaluated can be the generator voltage at a winding of the electric motor.

The small electric device may have a comparator device, provided at the phase winding of the electric motor tapped-off generator voltage to compare the generator voltage with a predetermined reference voltage. The reference voltage is preferably 0 V.

The time of measurement can be selected such that, in the case of a mechanically unloaded vibratory mechanism, it is near a zero crossing of the generator voltage, the frequency of which corresponds to the resonant frequency of the vibratory mechanism, and/or such that, in the case of a mechanical load on the vibratory mechanism at the time of measurement, it is at a zero crossing of the generator voltage.

The comparator device can be designed such that it provides a binary output signal as a function of the comparison, which can be fed to a processing device.

The small electrical appliance may have an indicator device designed to produce an audible or visual signal, depending on the electrical quantity determined for the mechanical load.

### BRIEF DESCRIPTION OF THE DRAWINGS

The invention is further illustrated by an exemplary embodiment and by reference to figures. In the figures
- Figs. 1 - 3: show the time progression of a generator voltage in a vibratory mechanism of a small electrical appliance without mechanical load (Fig. 1 and Fig. 3) and in a vibratory mechanism of a small electrical appliance with mechanical load (Fig. 2), and
- Fig. 4: is a block diagram of a circuit layout for detecting a mechanical load on a vibratory mechanism of a small electric device.

### DETAILED DESCRIPTION OF THE INVENTION

The method according to the invention for small electrical appliances with an electric motor and a vibratory mechanism is described in more detail using the example of an electric toothbrush. An electric toothbrush brush has a hand piece with an electric motor on the drive shaft of which a brush head can be attached. The electric motor can set the brush head into oscillation. The vibratory mechanism, which essentially comprises the rotor of the electric motor, the drive shaft and the brush head, has a specific resonant frequency. The resonant frequency changes when the vibratory mechanism is under mechanical load. During use, mechanical load can be exerted by the pressure of the brush head on the tooth surface, for example.

To achieve high efficiency, the electric motor is powered by alternating current, the frequency of which is near the resonant frequency of the oscillating mechanical components. Thus, the vibratory mechanical components also move at a frequency near their resonant frequency.

In the following, the frequency near the resonant frequency of the oscillating mechanical components is referred to as the *operating frequency.*

According to the invention, a change in the operating frequency of the vibratory mechanical components is used to detect a mechanical load on the vibratory components. To detect the change in operating frequency, the voltage which is induced by the winding of the moving electric motor, i.e., the counter-electromotive force (called *back EMF* in English), also called generator voltage, is measured and analyzed at a predetermined time of measurement.

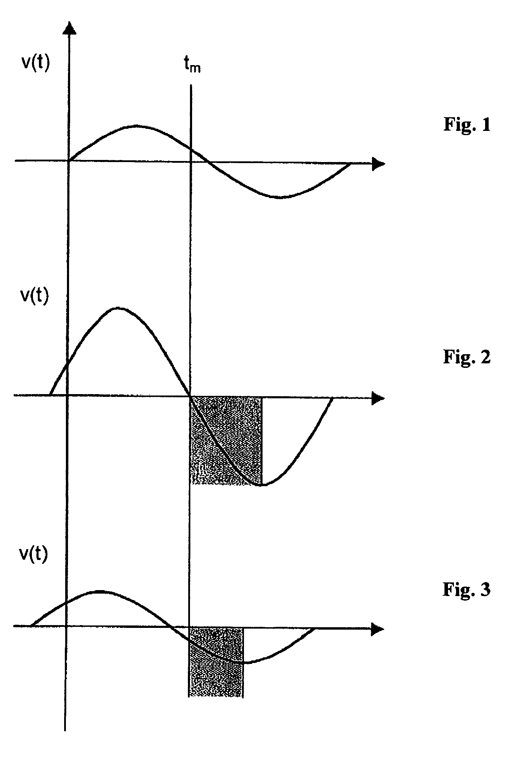

Fig. 1 shows the velocity over time *v(t)* of the electric motor without mechanical load applied on the vibratory mechanism. The generator voltage *u(t)* at a winding of the electric motor, not shown here, along with the motor constants of the electric motor, is proportional to the rate *v(t)* of the electric motor. The frequency of the measured generator voltage *u(t)* thereby corresponds to the operating frequency. The operating frequency itself is here just above the resonant frequency of the vibratory mechanism.

Fig. 3 likewise shows the velocity over time *v(t)* of the electric motor without mechanical load on the vibratory mechanism over time. In this connection, too, the generator voltage *u(t),* not shown here, along with the motor constants of the electric motor, is proportional to the velocity *v(t)* of the electric motor, so that the frequency corresponding to the measured generator voltage *u(t)* is also the operating frequency. The operating frequency itself is here just below the resonant frequency of the vibratory mechanism.

The time of measurement tₘ at which the generator voltage is measured and analyzed, is selected such that it is close to a zero crossing of the generator voltage. In Fig. 1, the time of measurement tₘ is just below the zero crossing; in Fig. 3 it is just above the zero crossing, so that, according to Fig. 1, the measured generator voltage is greater than zero and according to Fig. 3, the measured generator voltage is less than zero.

If the vibratory mechanism is mechanically loaded from outside, its frequency changes, which is reflected in the frequency of the generator voltage and thus in the generator voltage even at the time of measurement tₘ.

Fig. 2 shows the velocity over time *v(t)* of the electric motor with a mechanical load on the vibratory mechanism.

Because the generator voltage *u(t)* not shown in Fig. 2, along with the motor constants of the electric motor, is proportional to the velocity *v(t)* of the electric motor, a zero crossing of the generator voltage is reached at the time of measurement tm according to the speed *v(t).*

In this embodiment, a zero crossing of the generator voltage at the time of measurement tₘ, i. e., a generator voltage of 0 V, is interpreted as an external mechanical load on the vibratory mechanism. In the embodiment shown here, at the time of measurement, the frequency of the generator voltage at which a zero crossing of the generator voltage attunes, corresponds to the resonant frequency of the vibratory mechanism. The selected time of measurement tₘ in this embodiment corresponds to the time of zero crossing of the generator voltage in the case of resonance.

The time of measurement tₘ however, can also be selected such that, even excluding the case of resonance, a zero crossing of the generator voltage is indicative of a mechanical load at the time of measurement.

Establishing a zero crossing of the generator voltage as indicative of a mechanical load has the advantage that a zero crossing of the generator voltage can be very easily detected electrically.

Alternatively, for the time of measurement tₘ, a generator voltage different from zero can also be established, which is indicative of an external mechanical load. If the generator voltage reaches this established generator voltage at the time of measurement tₘ, this can also be interpreted as an external mechanical load on the vibratory mechanism.

If, at the time of measurement tₘ, a zero crossing of the generator voltage arrives at the generator voltage, or if the generator voltage reaches a predetermined value at the time of measurement tₘ, the performance of the device or the mechanical load on the vibratory mechanism are reported to the user. This can be done, for examplevia an indicator device for outputting a visible or audible signal. The user can then bring the device back into the resonance range by intuitively changing how he handles it. He will be guided in his use of the device so as to obtain optimal performance.

Another advantage of the method according to the invention is that, with little technical expenditure, a mechanical load on the vibratory mechanism can be discerned directly from the generator voltage. Sensors for detecting a mechanical load can be dispensed with.

The method according to the invention is not limited to use in electric toothbrushes. Rather, it may also be used in other electrical devices with vibrating direct drives, such as electric shavers and household appliances.

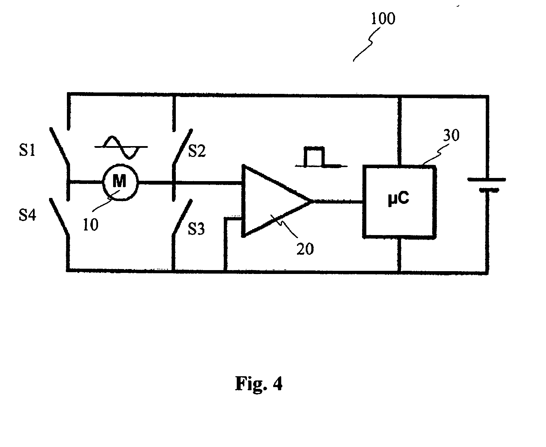

Fig. 4 shows a block diagram of a possible circuit configuration for detecting a mechanical load on a vibratory mechanism in a small electrical device by analyzing the generator voltage, which is induced by the moving electric motor in its phase winding.

For actuating the electric motor 10 a full bridge circuit with four switches is provided, in the shunt arm of which the electric motor 10 is arranged. The full bridge circuit is connected to a control and analysis device 30. The four switches of the full bridge circuit, which can be designed as transistors, for example, are controlled by the control and analysis device 30. The switch is controlled in a conventional manner such that the current flowing through the electric motor periodically changes direction. If switches S 1 and S3 are closed while switches S2 and S4 are open, current flows through switches S1 and S3 through the electric motor. If switches S2 and S4 are closed while switches S1 and S3 are open, a current flows through the electric motor in the opposite direction, through switches S2 and S4.

In addition, a comparing device 20 is provided to the generator voltage induced by the movement of the electric motor is in its winding, such as a comparator, with which the generator voltage is analyzed. Analysis of the generator voltage can be carried out using the processes described above with reference to Fig. 1 through Fig.3. According to this, the comparator can be designed to analyze the generator voltage at a predetermined time and to check whether a zero crossing has been reached or whether the generator voltage has reached a predetermined value.

As a result of the comparison, the comparator 20 provides a signal at its output (with high or low level) which is supplied to the control and evaluation unit 30. If they match, for example, if a zero crossing of the generator voltage is present at the time of measurement, a high level can be applied at the output of the comparator 20.

The control and analysis unit 30 can analyze the signal and, depending on the analysis, bring about a predetermined action. A predetermined action can be, for example, creating a visual or audible signal if the signal attached to the input of the control and analysis device 30 exhibits a high level.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A method for detecting a mechanical load on a vibratory mechanism of a small electrical appliance driven by an electric motor (10), wherein the electric motor (10) is driven by a drive current with a predetermined frequency, wherein an electrical quantity generated by the electric motor (10) is analyzed at a predetermined time of measurement (tₘ), and wherein the determined electrical quantity is indicative of the mechanical load on the vibratory mechanism.

2. The method according to Claim 1, wherein the electrical quantity is the generator voltage at a windingof the electric motor (10).

3. The method according to Claim 1 or 2, wherein the time of measurement (tₘ) is selected such that, in the case of a mechanically unloaded vibratory mechanism, it is near a zero crossing of the generator voltage.

4. The method according to Claim I or 2, wherein the time of measurement is selected such that, with a mechanical load on the vibratory mechanism at the time of measurement, a zero crossing of the generator voltage occurs.

5. The method according to Claim 4, wherein the frequency of the generator voltage which has a zero crossing at the time of measurement (tₘ), corresponds to the resonance frequency of the vibratory mechanism.

6. The method according to Claims 2 through 5, wherein the generator voltage is measured at the winding of the electric motor (10) and is applied at a comparator device, which comparator device is supplied with a predetermined reference voltage for comparison with the generator voltage.

7. The method according to Claim 6, wherein the reference voltage is 0 Volt.

8. The method according to one of Claim 6 or 7, wherein the comparator device provides a binary output signal as a function of the comparison and wherein the output signal produced is fed to a processing device.

9. The method according to any of the preceding claims, wherein, an acoustic or optical signal is generated depending on the analyzed electrical quantity, which is indicative of the mechanical load on the vibratory mechanism.

10. A small electrical appliance with a vibratory mechanism, an electric motor (10) for driving the vibratory mechanism, wherein the electric motor (10) is operated with a drive current of a predetermined frequency, and a device (100) for detecting a mechanical load on the vibratory mechanism, wherein the device (100) is designed to analyze at a predetermined time of measurement (tₘ) the electrical quantity generated by an electric motor (10), wherein the analyzed electrical quantity is indicative of the mechanical load on the vibratory mechanism.

11. The small electrical appliance according to Claim 10, wherein the electric quantity is the generator voltage at a windingof the electric motor (10).

12. The small electric appliance according to Claim 11, comprising a comparator device (20) which is fed the generator voltage tapped at the winding of the electric generator to compare the generator voltage with a predetermined reference voltage, which is preferably 0 Volt.

13. The small electrical appliance according to Claim 11 or 12, wherein the time of measurement is selected such that, in the case of a mechanically unloaded vibratory mechanism, the time of measurement is located near a zero crossing of the generator voltage, the frequency of which corresponds to the resonant frequency of the vibratory mechanism, and/or wherein the time of measurement is selected such that, with a

14. The small electrical appliance according to Claim 12 or 13, wherein the comparator device provides a binary output signal as a function of the comparison, which can be fed to a processing device (30).

15. The small electric device according to any of Claims 10 through 14, comprising an indicator device designed to produce an audible or visual signal indicative of the mechanical load on the vibratory mechanism, depending on the determined electrical quantity.
